Europäisches Patentamt

European Patent Office

Office européen des brevets

(19)

(11) Veröffentlichungsnummer : **0 002 699**
**B1**

(12) **EUROPÄISCHE PATENTSCHRIFT**

(45) Veröffentlichungstag der Patentschrift :
25.03.81

(21) Anmeldenummer : 78101603.5

(22) Anmeldetag : 07.12.78

(51) Int. Cl.³ : **G 06 K 15/10**, **B 41 J 3/20**,
**G 03 G 15/00**

(54) **Schaltungsanordnung für Matrixdrucker zum Erzeugen von Schriftzeichen nach dem Prinzip des Doppeldruckes.**

(30) Priorität : 30.12.77 DE 2758811

(43) Veröffentlichungstag der Anmeldung :
11.07.79 (Patentblatt 79/14)

(45) Bekanntmachung des Hinweises auf die Patenterteilung : 25.03.81 Patentblatt 81/12

(84) Benannte Vertragsstaaten :
BE CH FR GB NL

(56) Entgegenhaltungen :
DE - A - 2 708 591
FR - A - 2 353 905
US - A - 3 942 620
US - A - 4 029 190
IBM TECHNICAL DISCLOSURE BULLETIN,
vol. 14, no. 7, Dezember 1971
Armonk, New York
R.L. HOFFMAN : « Superposition of
Multiple Independent Matrix-
Display Symbol Sets », Seiten
2000 und 2001.

(73) Patentinhaber : SIEMENS AKTIENGESELLSCHAFT
Berlin und München
Postfach 22 02 61
D-8000 München 22 (DE)

(72) Erfinder : Kosel, Helmut
Georg-Queri-Strasse 3
D-8150 Holzkirchen (DE)

Imprimerie Jouve, 17, rue du Louvre, 75001 Paris, France

# 0 002 699

Schaltungsanordnung für Matrixdrucker zum Erzeugen von Schriftzeichen nach dem Prinzip des Doppeldruckes.

Die Erfindung betrifft eine Schaltungsanordnung für Matrixdrucker, insbesondere nichtmechanische Drucker, zum Erzeugen von Schriftzeichen nach dem Prinzip des Doppeldrucks durch Kombination zweier Zeichen, bei der die Zeichen zeilenweise in einem Seitenspeicher zusammen mit einem Steuerzeichen abgespeichert sind, durch das die Art des Abdruckes festgelegt wird.

Bei einem mit Laser arbeitenden, nichtmechanischen Drucker werden die zu druckenden Zeichen mit Hilfe eines Laserstrahles zunächst als Ladungsbild auf die Oberfläche einer Schreibtrommel aufgezeichnet. Nach Einfärben des Ladungsbildes erfolgt der Umdruck auf das Papier. Die für die Modulation des Laserstrahles erforderlichen Informationen werden einem in der Drucksteuerung befindlichen Zeichenbildspeicher entnommen, dieser ersetzt die im mechanischen Drucker üblichen Typenketten bzw. Typentrommeln. Der Zeichenvorrat eines derartigen Druckers wird begrenzt durch die Zahl der im Zeichenbildspeicher enthaltenen Zeichenbilder bzw. bei mechanischen Druckern durch die Anzahl der Typen.

Zur Erzeugung von zusätzlichen Zeichen ist von mechanischen Druckern her das Prinzip des Doppeldruckes bekannt. Bei diesem Verfahren wird bei einem Ausdruck von zwei Zeilentexten das Papier nur eine Zeile weiter transportiert bzw. nach Abdruck eines Zeichens erfolgt ein Rücksetzen und das neue Zeichen wird über das alte Zeichen geschrieben. Durch diese Kombination von zwei zum Zeichenvorrat des Druckers gehörenden Zeichen entsteht ein neues Kombinationszeichen.

Bei elektrofotografischen Druckern ist es jedoch nicht möglich, das Papier zeilenweise anzuhalten, um auf diese Weise Texte übereinander zu kopieren. Ebenso wenig ist ein Rücksetzen um eine Zeichenbreite möglich.

Aus der DE-OS 27 08 591 ist eine Schaltungsanordnung bekannt, durch die zu druckende Zeichen in der Größe verändert werden können. Dazu können die Zeichen in einem oberen Bereich und einem unteren Bereich in der Größe beeinflußt werden. Wenn dies geschehen soll wird diesem Bereich jeweils ein Steuerzeichen zugeordnet. Beim Druck werden die in der Größe beeinflußten Zeichenbereiche wieder zusammengesetzt.

Aufgabe der Erfindung ist es, für Matrixdrucker, insbesondere nichtmechanische Drucker, eine Schaltungsanordnung bereitzustellen, die auf einfache Weise die Erzeugung von Kombinationszeichen nach dem Prinzip des Doppeldruckes ermöglicht.

Diese Aufgabe wird gemäß der Erfindung dadurch gelöst, daß eine Adressierschaltungsanordnung vorgesehen ist, die bei Vorliegen eines Steuerzeichens für Doppeldruck alternierend die kodierten Zeichen der mit dem Steuerzeichen versehenen Zeile und die zugeordneten kodierten Zeichen der nachfolgenden Zeile als Adressen an einen Zeichenbildspeicher anlegt, und daß eine Auswerteschaltung vorgesehen ist, die den zugehörigen Inhalt des Zeichenbildspeichers der adressierten Zeichen gemeinsam einer Abdruckeinrichtung zuführt.

Die Adressierschaltungsanordnung besteht dabei aus einer Mehrzahl von über eine erste Wegeschaltung ansteuerbaren, dem dem Seitentextspeicher nachgeschalteten Zeilenregistern, aus einer zweiten Wegeschaltung und aus einer mit den Zeilenregistern in Verbindung stehenden Dekodiereinrichtung, die bei Feststellung eines Steuerzeichens für Doppeldruck in einem Zeilenregister dieses und das nachgeordnete Zeilenregister derart ansteuert, daß die am Ausgang der Zeilenregister anliegenden Zeichen alternierend über die zweite Wegeschaltung den Zeichenbildspeicher adressieren.

Bei einer besonderen Ausführungsform der Erfindung besteht die Auswerteschaltung darin, daß ein erster Ausgang des Zeichenbildspeichers mit einem Mikrospaltenregister und ein zweiter Ausgang mit einer, den zweiten Ausgang mit dem Ausgang des Mikrospaltenregisters verbindenden Oder-Schaltungsanordnung in Verbindung steht.

Mit der erfindungsgemäßem Schaltungsanordnung lassen sich in vorteilhafter Weise gemischt fremdsprachliche Texte, wie sie z.B. im Bibliothekswesen bei Druck von Autoren/Titellisten anfallen, drucken, ohne dazu den Zeichenbildspeicherinhalt zu erweitern. Die Vorzüge der Schaltungsanordnung treten dann besonders zutage, wenn bei technischen und wissenschaftlichen Texten Exponenten und Indizes gleichzeitig auftreten. In diesem Falle genügt die Speicherung von drei kurzen Zeichensätzen, die sich im wesentlichen nur durch Größe und Lage der Zeichen im Matrixfeld des Zeichenbildspeichers unterscheiden. Ohne Doppeldruck müßten für alle auftretenden Zeichenkombinationen von Exponenten und Indizes ein eigenes Bildelement vorhanden sein.

Ausführungsformen der Erfindung sind in den Zeichnungen dargestellt und werden im folgenden beispielsweise näher beschreiben. Es zeigen :

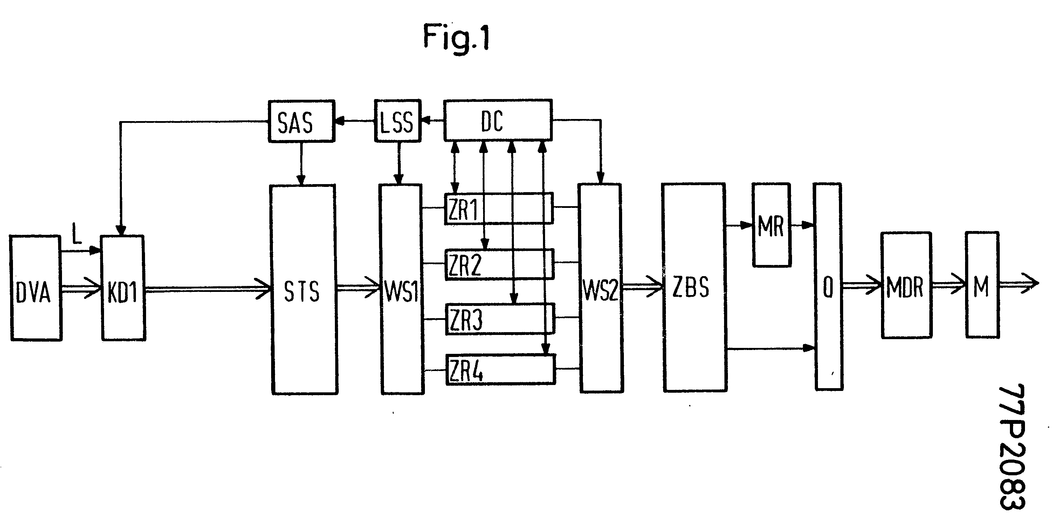

Fig. 1   ein Blockschaltbild der erfindungsgemäßen Schaltungsanordnung,

Fig. 2   ein Funktionsbild der erfindungsgemäßen Schaltungsanordnung und

Fig. 3   eine schematische Darstellung des Bildspeicherinhaltes beim Drucken von Exponenten und Indizes.

Die in den Figuren dargestellte Schaltungsanordnung für Matrixdrucker zum Erzeugen von Schriftzeichen nach dem Prinzip des Doppeldruckes wird in einem Laserdrucker verwendet, der nach dem Prinzip des elektrofotografischen Druckes arbeitet. Dabei werden die zu druckenden Zeichen mit Hilfe eines Laserstrahles zunächst als Ladungsbild auf die Oberfläche einer Schreibtrommel aufgezeichnet. Nach Einfärben des Ladungsbildes erfolgt der Umdruck auf das Papier. Die für die Modulation des Laserstrahles erforderlichen Informationen werden einem in der Drucksteuerung befindlichen Zeichenbildspeicher ZBS entnommen. Dieser ersetzt die in mechanischen Druckern üblichen Typenketten bzw. Typentrommeln. Der Zeichenbildspeicher ZBS ist durch ein Betriebssystem ladbar und kann bis zu vier Zeichensätze bzw. bis zu 255 Zeichenbilder aufnehmen. Jedes Bild wird in Form einer 18. 24 Bit-Matrix gespeichert und stellt einen Druckbereich von 4 mm Zeilenhöhe und 2,5 mm Zeichenbreite dar. Kleinere Zeichenfelder erhält man durch Teilabtastung der Matrix während des Druckvorganges.

Aus technischen Gründen ist ein Wechsel des Zeichenbildspeicherinhaltes innerhalb eines Seitentextes nicht möglich, so daß man mit maximal 255 verschiedenen Zeichen (Buchstaben, Ziffern, Graphikzeichen, etc.) auskommen muß.

Die Erfindung ermöglicht es nun, den Laserdrucker auch für kompliziertere Texte einsetzen zu können. Zu diesem Zweck wird die Steuerung des Gerätes so ausgelegt, daß für eine Zeile zwei Texte verarbeitet werden können. Mit Hilfe dieses « Doppeldruckverfahrens » können dann für jede Druckstelle zwei beliebige Zeichenformen aus dem Zeichenbildspeicher ZBS abgerufen und zu einem neuen Zeichen, dem Kombinationszeichen, zusammengesetzt werden. Bei geeigneter Auswahl der Zeichen- und Graphikelemente läßt sich damit der pro Seite verfügbare Zeichenvorrat ohne Erweiterung des Zeichenbildspeichers ZBS um ein Vielfaches erhöhen.

Da es bei elektrofotografischen Druckern nicht möglicht ist, das zu bedruckende Papier zeilenweise anzuhalten, um auf diese Weise Texte übereinander zu drucken, müssen diese Texte bereits vor dem Drucken entsprechend aufbereitet werden. So werden die Texte zweier aufeinanderfolgender Zeilen ZT1, ZT2 von einer Datenverarbeitungsanlage DVA ausgesendet. Die aufeinanderfolgenden Zeilen werden in einem Seitentextspeicher STS abgelegt, wobei die Zeilentrennung durch spezielle Steuerzeichen SZ1, SZ2 erfolgt. Diese Steuerzeichen SZ1, SZ2 geben außer anderen zusätzlichen Funktionen an, ob ein Zeilensprung erfolgen soll (SZ2) oder nicht (SZ1). Das bedeutet, diese Steuerzeichen informieren darüber, ob. z.B. die Zeile ZT1 mit der nächstfolgenden Zeile ZT2 gemeinsam abgedruckt werden soll.

Das Ablegen im Seitentextspeicher STS kann dabei in der folgenden Weise geschehen : Die Datenverarbeitungsanlage DVA gibt bei Vorliegen eines durch Kombination zweier Zeichen erzeugbaren Kombinationszeichens über eine Leitung L ein Signal an eine Kodiereinrichtung KD1 ab. Diese Kodiereinrichtung KD1 kennzeichnet in diesem Fall die Zeile ZT1 mit einem Steuerzeichen SZ1. Das bedeutet, daß die Zeile ZT1 mit der nächstfolgenden Zeile ZT2 gemeinsam abgedruckt wird. Liegt kein Kombinationszeichen vor, so wird die Zeile mit dem Steuerzeichen SZ2 gekennzeichnet.

Mit Hilfe einer Speicheradressiereinrichtung SAS, die z.B. ein Zähler sein kann, werden die so gekennzeichneten Zeilentexte aufeinanderfolgend im Seitentextspeicher STS abgelegt.

Nach Übertragung einer kompletten Seite werden die Texte der Zeilen ZT1, ZT2 etc. aus dem Seitentextspeicher STS abgerufen und über eine Lese-Steuer-Schaltung LSS und eine Wegeschaltung WS1 in Zeilenregistern ZR1, ZR2, ZR3, ZR4 abgelegt.

Eine Dekodiereinrichtung DC prüft nun, ob in einem Zeilenregister ein Steuerzeichen SZ1 enthalten ist. Ist im Zeilenregister ZR1 ein Steuerzeichen SZ1 enthalten, woraus folgt, daß diese Zeile gemeinsam mit der nächstfolgenden Zeile verarbeitet werden soll, so bearbeitet die Dekodiereinrichtung DC dieses Zeilenregister ZR1 und das nächstfolgende Zeilenregister ZR2 parallel. Die Zeichencodes werden gleichzeitig in beiden Zeilenregistern ZR1 und ZR2 schrittweise nach rechts verschoben. Über eine weitere Wegeschaltung WS2 werden die nach jeder Rechtsverschiebung an den Ausgängen der Zeilenregister anstehenden Zeichencodes alternierend als Adressen an den Zeichenbildspeicher ZBS angelegt. Der jeweils adressierte Inhalt des Zeichenbildspeichers ZBS wird mit Hilfe einer Ausworteschaltung mikrospaltenweise ausgelesen. Eine Mikrospalte entspricht dabei einer Spalte der 18. 24 Bit-Matrix für ein Zeichenbild im Zeichenbildspeicher ZBS.

Mit einem ersten Taktschritt wird eine Mikrospalte des Zeichens aus dem Zeichenbildspeicher ZBS entsprechend dem im ersten Zeichenregister ZR1 enthaltenen Zeichencode zu einem nachfolgenden Mikrospaltenregister MR übertragen. Im zweiten Taktschritt wechselt die Adresse am Zeichenbildspeicher ZBS auf den im Zeichenregister ZR2 enthaltenen Zeichencode und die entsprechende Mikrospalte des zweiten Zeichens wird angelesen. Über eine ODER-Schaltung O wird in einem dritten Taktschritt die Summe von Zeichenbildspeicherausgang und Mikrospaltenregister MR in ein Modulationsregister MDR übertragen. Das Modulationsregister MDR steuert über einen Modulator M und einen hier nicht dargestellten Frequenzgenerator und akustoopotischem Wandler den Laserstrahl in vertikaler Richtung, während die Horizontalablenkung des Strahles mit einem ständig rotierenden Polygonspiegel erfolgt (DE-AS 25 50 212). Ist ein Doppelzeichen auf diese Weise ausgegeben, erfolgt ein Rechtsschritt in beiden Zeilenregistern ZR1, ZR2.

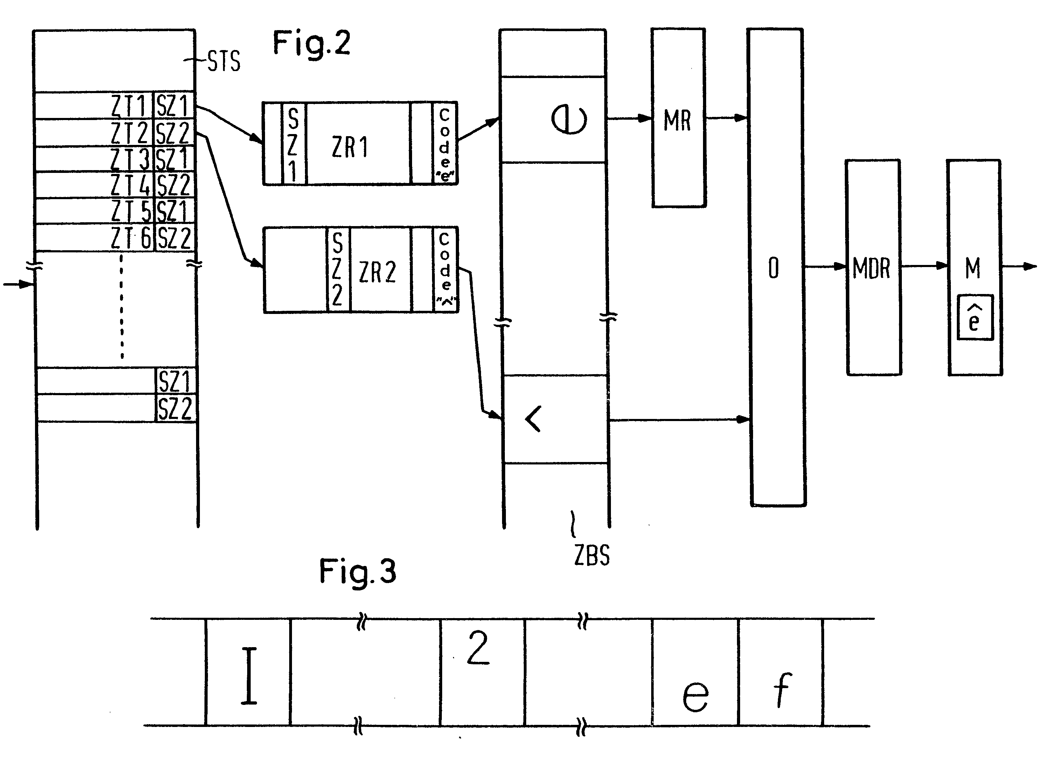

Nach dem Druck der beiden Zeilenregisterinhalte ZR1, ZR2 bewegt sich das zu druckende Papier um eine Zeile weiter. Mit den beiden in der Figur 2 dargestellten Zeichenelementen « e » und « ˆ » ergibt sich damit das kombinierte Druckzeichen « ê ». Zeilen mit und ohne Doppeldruck können in beliebiger Folge gedruckt werden. Ebenso ist es möglich, innerhalb einer Zeile mit Doppeldruck kombinierte und einfache Zeichen zu mischen. Soll in einer Druckspalte nur ein einfaches Zeichen gedruckt werden, dann muß der Ausgang eines der beiden Zeilenregister den Code für ein « Blank »-Zeichen liefern.

Sollen Zeilen ohne Zeichenkombination gedruckt werden, sind die einzelnen Zeilen mit den Steuerzeichen SZ2 gekennzeichnet. Jeder ausgegebene Textblock wird dann in eine eigene Zeile gedruckt.

Die Erfindung ermöglicht es, in gemischt fremdsprachlichen Texten, wie sie z.B. im Bibliothekswesen beim Druck von Autoren- und Titellisten anfallen, auch besondere zusammengesetzte Zeichen wie

å, à, â, é, è, ê, î, ô, ù, û, ...

zu bilden.

Ein wesentlicher Vorteil der Erfindung tritt beim Druck von technischen und wissenschaftlichen Texten zutage, wenn Exponenten und Indizes gleichzeitig auftreten. In diesem Fall genügt die Speicherung von drei kurzen Zeichensätzen, die sich im wesentlichen nur durch Größe und Lage der Zeichen im Matrixfeld gemäß der Darstellung in Fig. 3 unterscheiden. Das Formelzeichen für $I_{eff}^2$ läßt sich z.B. sehr leicht aus den in der Fig. 3 dargestellten Elementen zusammensetzen. Ohne Doppeldruck müssten für alle auftretenden Zeichenkombinationen von Exponenten und Indizes ein eigenes Bildelement vorhanden sein.

Mit den gleichen Elementen aus der Fig. 3 können auch Zeilen im Abstand von 2mm gedruckt werden. Besonders vorteilhaft für die Textgestaltung ist hier die Möglichkeit, innerhalb einer Zeile zwischen einem Zeilenabstand von 4mm und einem solchen von zweimal 2mm in der nachfolgend dargestellten Weise beliebig zu wechseln :

... Zeilenabstand 2 mm

Zeilenabstand 4 mm                     4 mm

... Zeilenabstand 2 mm

**Ansprüche**

1. Schaltungsanordnung für Matrixdrucker, insbesondere nichtmechanische Drucker, zum Erzeugen von Schrift, zeichen nach dem Prinzip des Doppeldruckes durch Kombination zweier Zeichen, bei der die Zeichen zeilenweise in einem Seitentextspeicher (STS) zusammen mit einem Steuerzeichen (SZ1, SZ2) abgespeichert sind, durch das die Art des Abdruckes festgelegt wird, dadurch gekennzeichnet, daß eine Adressierschaltungsanordnung (ZR, 1 bis ZR4, DC, WS2) vorgesehen ist, die bei Vorliegen eines Steuerzeichens (SZ1) für Doppeldruck alternierend die kodierten Zeichen der mit dem Steuerzeichen (SZ1) versehenen Zeile (ZT1) und die zugeordneten kodierten Zeichen der nachfolgenden Zeile (ZT2) als Adressen an einen Zeichenbildspeicher (ZBS) anlegt, und daß eine Auswerteschaltung (MR, O) vorgesehen ist, die den zugehörigen Inhalt des Zeichenbildspeichers (ZBS) der adressierten Zeichen gemeinsam einer Abdruckeinrichtung (MDR, M) zuführt.

2. Schaltungsanordnung nach Anspruch 1, dadurch gekennzeichnet, daß die Adressierschaltungsanordnung aus einer Mehrzahl von über eine erste Wegeschaltung (WS1) ansteuerbaren, dem Seitentextspeicher (STS) nachgeschalteten Zeilenregistern (ZR1 bis ZR4), aus einer zweiten Wegeschaltung (WS2), und aus einer mit den Zeilenregistern (ZR1 bis ZR4) in Verbindung stehenden Dekodiereinrichtung (DC) besteht, die bei Feststellung des Steuerzeichens (SZ1) für Doppeldruck in einem Zeilenregister (ZR1) dieses und das nachgeordnete Zeilenregister (ZR2) derart ansteuert, daß die an den Ausgängen der Zeilenregister anliegenden Zeichen über die zweite Wegeschaltung (WS2) den Zeichenbildspeicher (ZBS) adressieren.

3. Schaltungsanordnung nach Anspruch 1 oder 2, dadurch gekennzeichnet, daß die Auswerteschaltung aus einem Mikrospaltenregister (MR), das mit einem ersten Ausgang des Zeichenbildspeichers (ZBS) verbunden ist, und aus einer ODER-Schaltung (O), deren einer Eingang mit einem Ausgang des Mikrospaltenregisters (MR) und deren anderer Eingang mit einem zweiten Ausgang des Zeichenbildspeichers (ZBS) verbunden ist, besteht.

**Claims**

1. Circuit arrangement for matrix printers, in particular for non-mechanical printers, for the production of characters in accordance with the principle of double printing by combining two characters, wherein the characters are stored in a page text store (STS) together with a control character (SZ1, SZ2) by means of which the kind of the print is determined, characterised in that an addressing circuit arrangement (ZR1 to ZR4, DC, WS2) is provided which when a control character (SZ1) for double printing is present alternately feeds the coded characters of the row (ZT1) which is provided with the control character (SZ1) and the assigned coded characters of the following row (ZT2) to a character image store (ZBS) as addresses, and that an evaluating circuit (MR, O) is provided which supplies the assigned contents of the character image store (ZBS) of the addressed characters together to a printing device (MDR, M).

2. Circuit arrangement as claimed in claim 1, characterised in that the addressing circuit arrangement consists of a plurality of row registers (ZR1 to ZR4) which can be controlled via a first path switching device (WS1) and are connected following the page text store (STS), of a second path switching device (WS2) and of a decoding device (DC) which is connected to the row registers (ZR1 to ZR4) and which upon identification of the control character (SZ1) for double printing in a row register (ZR1) controls this and the following row register (ZR2) in such a manner that the characters present at the outputs of the row registers address the character image store (ZBS) via the second path switching device (WS2).

3. Circuit arrangement as claimed in claim 1 or 2, characterised in that the evaluating circuit consists of a micro-column register (MR) which is connected to a first output of the character image store (ZBS), and of an OR-circuit (O) whose one input is connected to an output of the micro-column register (MR) and whose other input is connected to a second output of the character image store (ZBS).

## Revendications

1. Montage pour une imprimante par points, notamment une imprimante non mécanique, pour la production de caractères selon le principe de l'impression double par combinaison de deux signes, et dans lequel les signes sont mémorisés ligne par ligne dans une mémoire de textes en pages (STS) dans laquelle est également mémorisé un signe de commande (SZ1, SZ2) qui détermine le type de l'impression, caractérisé par le fait qu'il est prévu un montage d'adressage (ZR1 à ZR4 ; DC, WS2), qui, lors de la présence d'un signal de commande (SZ1) pour l'impression double, applique alternativement les signes codés de la ligne (ZT1), munie du signe de commande (SZ1), et les signes codés associés de la ligne suivante (ZT2) en tant qu'adresses à une mémoire d'images de signes (ZBS), et qu'il est prévu un circuit d'exploitation (MR, O) qui envoie le contenu associé de la mémoire (ZBS) des images des signes adressés en commun à un dispositif d'impression (MDR, M).

2. Montage suivant la revendication 1, caractérisé par le fait que le montage d'adressage est constitué par plusieurs registres de lignes (ZR1 à ZR4), pouvant être commandés par l'intermédiaire d'un premier circuit d'acheminement (WS1) et branché en série et en aval de la mémoire de textes en pages (STS), par un second circuit d'acheminement (WS2) et par un dispositif de décodage (DC), relié au registre de lignes (ZR1 à ZR4) et qui, lors de la détermination du signe de commande (SZ1) pour l'impression double dans un registre de lignes (ZR1), commande ce dernier et le registre de lignes suivant (SR2) de telle manière que les signes présents sur les sorties des registres de lignes adressent la mémoire d'images de signes (ZBZ) par l'intermédiaire du second circuit d'acheminement (WS2).

3. Montage suivant la revendication 1 ou 2, caractérisé par le fait que le circuit d'exploitation est constitué par un registre de microcolonnes (MR), qui est relié à une première sortie de la mémoire d'images de signes (ZBZ), et par un circuit OU (O) dont une entrée est reliée à une sortie du registre de microcolonnes (MR) et dont l'autre entrée est reliée à une seconde sortie de la mémoire d'images de signes (ZBS).

0 002 699

77P2083 1/2

Fig.1

DVA — L — KD1 — STS — WS1 — ZBS — MR — O — MDR — M

SAS — LSS — DC — ZR1 ZR2 ZR3 ZR4 — WS2

## Fig.2

## Fig.3